# EUROPEAN PATENT APPLICATION

(11) **EP 4 625 503 A1**
(43) Date of publication of application: **01.10.2025**
(21) Application number: 23894156.1
(22) Date of filing: 14.06.2023
(51) Int. Cl.: H01M 4/04, H01M 4/139, H01M 4/62, H01M 4/64

(54) **BATTERY MATERIAL PRODUCTION DEVICE, BATTERY MATERIAL PRODUCTION SYSTEM, AND BATTERY MATERIAL PRODUCTION METHOD**

(30) Priority: 25.11.2022 JP 2022188312
(71) Applicant: The Japan Steel Works, Ltd., Tokyo 141-0032 (JP)
(72) Inventor: UEDA, Naoki, Tokyo 141-0032 (JP); HIRAMATSU, Seiya, Tokyo 141-0032 (JP); NAKAMURA, Satoru, Tokyo 141-0032 (JP); FURUKI Kenichi, Tokyo 141-0032 (JP)
(74) Representative: Simmons & Simmons LLP (Munich)
(86) International application number: PCT/JP2023/022075
(87) International publication number: WO 2024/111140

(57) **Abstract**

This battery material production device (100) comprises a stretching device (160), a monitoring device (180), and a control device (200). The stretching device (160): receives a sheet-form molded article, which is obtained by kneading a base and a filler, at a first conveyance speed from a sheet-forming device (140) that continuously delivers the molded article; and delivers the molded article at a second conveyance speed higher than the first conveyance speed, thereby reducing the thickness of the molded article. The monitoring device (180): monitors at least one of tensile force, distortion, and thickness pertaining to the molded article at a plurality of different positions in order to determine stretching conditions under which voids will not form in the molded article, thus generating monitoring data; and outputs the monitoring data to the control device (200), which controls the stretching conditions.

## Description

### Technical Field

The present invention relates to a battery material manufacturing apparatus, a battery material manufacturing system, and a battery material manufacturing method.

### Background Art

In recent years, as the demand for batteries has increased in various fields, progress in the development of next-generation batteries has been made. As examples of such next-generation batteries, a technology in which the material of a current collector is changed from a metal to a resin, and a technology in which a certain polymer is impregnated with an electrolyte have been proposed.

For example, Patent Literature 1 discloses a resin current collector for a lithium-ion battery, including a conductive resin layer containing a matrix resin, a conductive filler, and a conductive filler dispersing agent.

Patent Literature 2 discloses a resin current collector for a positive electrode in which a conductive filler is dispersed in a matrix resin containing a certain polymer.

Patent Literature 3 discloses a negative electrode for a lithium-ion battery, including a current collector and a negative electrode composition layer disposed over a surface of the current collector, and a method for manufacturing such a negative electrode for a lithium-ion battery.

### Citation List

### Patent Literature

Patent Literature 1: Japanese Unexamined Patent Application Publication No. 2021-068587
Patent Literature 2: Japanese Unexamined Patent Application Publication No. 2021-118046
Patent Literature 3: Japanese Unexamined Patent Application Publication No. 2021-125337

### Summary of Invention

However, it cannot be said that means for mass-producing lithium-ion batteries or battery materials has been established in the inventions disclosed in the above-mentioned patent literatures. Further, when a sheet-like battery material containing a filler is manufactured, there is a possibility that voids may be formed between the base material and the filler. Such voids cause the quality of the battery to deteriorate.

The present disclosure has been made in order to solve such a problem, and an object thereof is to provide a battery material manufacturing apparatus and the like capable of continuously and efficiently manufacturing a battery material while preventing voids from being formed therein.

A battery material manufacturing apparatus according to the present disclosure includes a stretching apparatus and a monitoring apparatus. The stretching apparatus receives a sheet-like molded article from a sheet casting apparatus at a first conveyance speed and sends out the received molded article at a second conveyance speed higher than the first conveyance speed, thereby reducing a thickness of the molded article, the molded article being obtained by kneading a base material and a filler, and the sheet casting apparatus being configured to continuously send out the molded article. The monitoring apparatus generates monitoring data by monitoring at least one of a tension exerted in the molded article, a strain caused in the molded article, and a thickness of the molded article at each of a plurality of different positions on the molded article in order to determine a stretching condition under which no void is formed in the molded article, and outputs the generated monitoring data to a control apparatus configured to control the stretching condition.

In a method for manufacturing a battery material according to the present disclosure, a battery material manufacturing apparatus performs the following processes. The battery material manufacturing apparatus receives a sheet-like molded article from a sheet casting apparatus at a first conveyance speed, the molded article being obtained by kneading a base material and a filler, and the sheet casting apparatus being configured to continuously send out the molded article. The battery material manufacturing apparatus stretches the molded article so as to reduce a thickness of the molded article by sending out the molded article at a second conveyance speed. The battery material manufacturing apparatus acquires monitoring data from a monitoring apparatus configured to monitor at least one of a tension exerted in the molded article, a strain caused in the molded article, and a thickness of the molded article at each of a plurality of different positions on the molded article. The battery material manufacturing apparatus determines a stretching condition under which no void is formed in the molded article according to the monitoring data. The battery material manufacturing apparatus controls a stretching apparatus based on the stretching condition.

According to the present disclosure, it is possible to provide a battery material manufacturing apparatus and the like capable of continuously and efficiently manufacturing a battery material while preventing voids from being formed therein.

### Brief Description of Drawings

Fig. 1 is a structural diagram of a battery according to an embodiment;
Fig. 2 is an overall configuration diagram of a battery material manufacturing system according to an embodiment;
Fig. 3 is a block diagram of the battery material manufacturing system;
Fig. 4 is a drawing for explaining states of a molded article;
Fig. 5 is a first graph showing a relationship between the strain and the tension of a molded article;
Fig. 6 is a second graph showing a relationship between the strain and the tension of a molded article;
Fig. 7 is a third graph showing a relationship between the strain and the tension of a molded article;
Fig. 8 is a flowchart of a method for manufacturing a battery material; and
Fig. 9 is a flowchart showing a method for controlling a stretching apparatus.

### Description of Embodiments

The present invention will be described hereinafter through embodiments of the invention, but the invention according to the claims is not limited to the below-shown embodiments. Further, all the components/structures described in the embodiments are not necessarily indispensable as means for solving the problem. For clarifying the explanation, the following description and the drawings are partially omitted and simplified as appropriate. Note that the same reference numerals (or symbols) are assigned to the same elements throughout the drawings and redundant descriptions thereof are omitted as appropriate.

### <Embodiment>

A battery material manufacturing system according to an embodiment will be described hereinafter with reference to the drawings. The battery material manufacturing system according to this embodiment manufactures a material for manufacturing a certain battery. The certain battery is, for example, a lithium-ion battery which is a type of semi-solid battery.

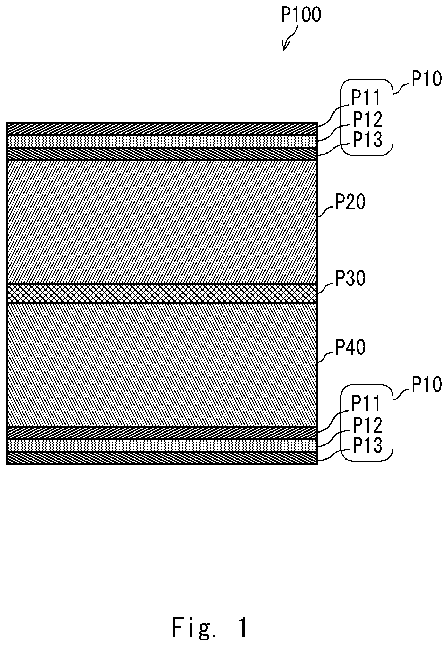

Fig. 1 is a structural diagram of a battery according to this embodiment. The battery P100 shown in Fig. 1 includes, from the top thereof, a current collector P10, a positive electrode layer P20, a separator P30, a negative electrode layer P40, and another current collector P10, all of which are stacked on one another in a layered structure.

Each of the current collectors P10 includes, from the top, a negative electrode current collector P11, a current collecting base material P12, and a positive electrode current collector P13, all of which are laminated on one another in a layered structure.

The negative electrode current collector P11 includes, as its main components, a matrix resin and a conductive filler dispersed in the matrix resin. The matrix resin is, for example, PP (polypropylene), PMMA (acrylic resin), or PVC (polyvinyl chloride). The conductive filler is, for example, a conductive powder material such as a titanium powder, a nickel powder, an aluminum powder, or carbon black. The conductive filler is not limited to the aforementioned examples, but may be a conductive fiber material such as carbon nanotubes, graphene, or metal nanowires. The negative electrode current collector P11 may contain a dispersant. The components and composition of the dispersant are not limited to any particular components and compositions as long as the dispersant is made of a resin that can be molded into a film or a sheet. The dispersant may be, for example, a copolymer of PP and PE (polyethylene).

Among the aforementioned compositions and the like, in the case where the conductive filler is a powder material, the particle diameters of the powder material are preferably 1 micrometer or longer and 500 micrometers or shorter. Further, the mass percentage of the conductive filler is preferably 5% or higher and 85% or lower, and more preferably 20% or higher and 80% or lower. The conductive filler may form secondary particles. The secondary particles are aggregated particles that are formed as primary particles having particle diameters of 1 nanometer or longer and shorter than 10 micrometers are aggregated (clustered). The shape of the secondary particles does not necessarily have to be a spherical shape or a lump-like shape close to a spherical shape, and instead may be a shape in which particles are connected like beads of a rosary or may have parts branched in a dendritic shape.

Further, in the case where the conductive filler is a fiber material, the diameters of fibers of the fiber material are 1 nanometer or longer and 500 nanometers or shorter, and the lengths of fibers thereof are 1 micrometer or longer and 500 micrometers or shorter. Further, the mass percentage of the conductive filler is preferably 5% or higher and 85% or lower, and more preferably 20% or higher and 80% or lower.

Note that the particle diameter can be suitably measured by using a particle size distribution measuring apparatus using diffraction and scattering of laser light. That is, the particle diameter may be the mean of a particle size distribution in measurement by the particle size distribution measuring apparatus. Further, the fiber diameter and the fiber length can also be measured by using the aforementioned particle size distribution measuring apparatus. In this case, since a particle size distribution pattern obtained by measurement has a plurality of peaks, a peak on a small diameter side may be determined to be a fiber diameter, and a peak on a large diameter side may be determined to be a fiber length.

The current collecting base material P12 is provided between the negative electrode current collector P11 and the positive electrode current collector P13. The current collecting base material P12 contains, for example, PP, a copolymer of PP and PE, carbon black, graphite, or the like.

The positive electrode current collector P13 contains, as its main components, a matrix resin and a conductive filler dispersed in the matrix resin. The matrix resin is, for example, PP. Further, the conductive filler is, for example, a carbon powder or carbon fibers. The form of the carbon powder is not limited to any particular form as long as the carbon powder is a powder material containing carbon as its main component. That is, the carbon powder may be graphite or carbon black. Further, the form of the carbon fibers is not limited to any particular form as long as the carbon fibers are a fiber material containing carbon as its main component. That is, the carbon fibers may be carbon nanotubes or graphene. Further, the positive electrode current collector P13 may contain a dispersant. The dispersant may be, for example, a copolymer of PP and PE.

Among the aforementioned compositions and the like, in the case where the conductive filler is a powder material, the particle diameters of the powder material are preferably 1 micrometer or longer and 500 micrometers or shorter. Further, the mass percentage of the conductive filler is preferably 5% or higher and 85% or lower, and more preferably 20% or higher and 80% or lower. The conductive filler may form secondary particles. The secondary particles are aggregated particles that are formed as primary particles having particle diameters of 1 nanometer or longer and shorter than 10 micrometers are aggregated (clustered). The shape of the secondary particles does not necessarily have to be a spherical shape or a lump-like shape close to a spherical shape, but may be a shape in which particles are connected like beads of a rosary or may have parts branched in a dendritic shape.

Further, in the case where the conductive filler is a fiber material, the diameters of fibers of the fiber material are 1 nanometer or longer and 500 nanometers or shorter, and the lengths of fibers thereof are 1 micrometer or longer and 500 micrometers or shorter. Further, the mass percentage of the conductive filler is preferably 5% or higher and 85% or lower, and more preferably 20% or higher and 80% or lower. As for the current collector P10 on the positive electrode side, the positive electrode current collector P13 is in contact with the positive electrode layer P20, and the negative electrode current collector P11 is disposed on the opposite side thereto.

The positive electrode layer P20 is provided between the positive electrode current collector P13 and the separator P30. The positive electrode layer P20 contains a gelled polymer compound, a positive electrode active material, and a conductive filler. The gelled polymer compound may be a conductive resin.

The separator P30 is provided between the positive electrode layer P20 and the negative electrode layer P40. The separator P30 is, for example, a polyolefin-based (PO-based) microporous membrane or the like.

The negative electrode layer P40 is provided between the separator P30 and the negative electrode current collector P11. The negative electrode layer P40 contains a gelled polymer compound, negative electrode active material particles, and a conductive filler. The gelled polymer compound may be a conductive resin.

The current collector P10 is disposed on the side of the negative electrode layer P40 opposite to the side thereof on which the negative electrode layer P40 is in contact with the separator P30. As for the current collector P10 on the negative electrode side, the negative electrode current collector P11 is in contact with the negative electrode layer P40, and the positive electrode current collector P13 is disposed on the opposite side thereto.

Although the structure of the battery P100 according to this embodiment has been described above, the battery P100 may include a structural material or the like for maintaining the form of the battery P100 in addition to the above-described structure. Further, the battery P100 may also be configured in such a manner that a plurality of batteries P100 are stacked on one another in a layered structure.

In the battery P100 described above, for example, the current collector P10 can be manufactured as follows. That is, a manufacturer first molds a current collecting base material P12 into a film. Next, the manufacturer applies a negative electrode current collector P11 to one of the surfaces of the molded current collecting base material P12 and dries the applied the negative electrode current collector P11. Further, the manufacturer applies a positive electrode current collector P13 to the surface on the opposite side of the current collecting base material P12 and dries the applied positive electrode current collector P13. The battery material manufacturing system according to this embodiment manufactures, for example, the current collecting base material P12 described above.

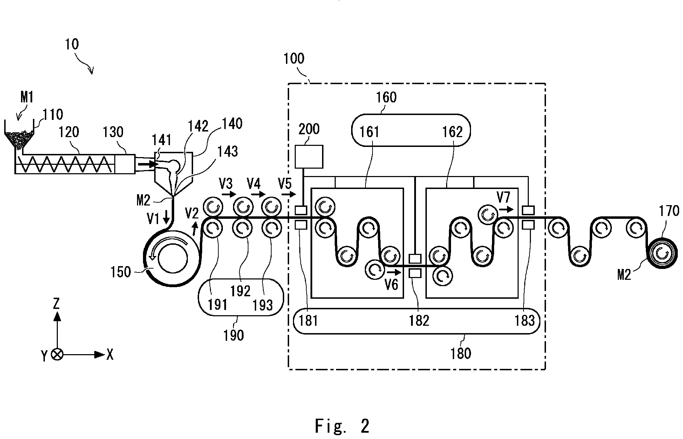

Next, the battery material manufacturing system will be described with reference to Fig. 2. Fig. 2 is an overall configuration diagram of a battery material manufacturing system 10 according to this embodiment. As for the battery material manufacturing system 10 shown in Fig. 2, each of the components and the like is schematically shown for the ease of understanding. The battery material manufacturing system 10 shown in the drawing continuously manufactures, for example, the above-described current collecting base material P12. The battery material manufacturing system 10 includes, as its main component, a battery material manufacturing apparatus 100. Further, in addition to the battery material manufacturing apparatus 100, the battery material manufacturing system 10 includes a raw material feeding unit 110, an extruder 120, a pump unit 130, a sheet casting apparatus 140, a cast roller 150, a rolling system 190, and a winding apparatus 170.

### (Battery Material Manufacturing Apparatus)

The battery material manufacturing apparatus 100 manufactures a battery material by receiving a sheet-like molded article, which is obtained by kneading a base material and a filler, and stretching, i.e., drawing, the received sheet-like molded article. The battery material manufacturing apparatus 100 includes, as its main components, a stretching apparatus 160, a monitoring apparatus 180, and a control apparatus 200.

The stretching apparatus 160 receives a sheet-like molded article sent out from the sheet casting apparatus 140, stretches, i.e., stretches, the received molded article, and sends out the molded article of which the thickness has been reduced by the stretching. As for the molded article that the stretching apparatus 160 receives, the sheet casting apparatus 140 continuously sends out a sheet-like molded article obtained by kneading a base material and a filler. Further, in this process, the stretching apparatus 160 is controlled so that the conveyance speed, i.e., the speed at which the molded article is conveyed, on the downstream side is higher than the conveyance speed on the upstream side. For example, the stretching apparatus 160 receives a molded article at a first conveyance speed and sends out the received molded article at a second conveyance speed higher than the first conveyance speed, and by doing so, stretches, i.e., draws, the molded article, thereby reducing its thickness. The aforementioned first and second conveyance speeds of the stretching apparatus 160 are controlled by the control apparatus 200.

The monitoring apparatus 180 monitors at least one of a tension exerted in the molded article, a strain caused in the molded article, and the thickness of the molded article at each of a plurality of different positions on the molded article in order to determine a stretching condition(s) under which no void is formed in the molded article. Further, the monitoring apparatus 180 generates monitoring data on at least one of the tension exerted in the molded article, the strain caused in the molded article, and the thickness of the molded article, and outputs the generated monitoring data to the control apparatus 200. The monitoring apparatus 180 may include, for example, a tension sensor for measuring a tension exerted in the molded article. Further, the monitoring apparatus 180 may also include a strain sensor for measuring a strain caused in the molded article. Note that the strain caused in the molded article may be calculated from a difference between a thickness on the upstream side and that on the downstream side. Further, the strain caused in the molded article may be calculated from a difference between a thickness on the upstream side and that on the downstream side, and a length or the like by which the molded article has been stretched, i.e., drawn, in the conveyance direction. In this case, the monitoring apparatus 180 may measure the thickness by using an optical size measuring device. Further, the monitoring apparatus 180 may calculate a length or the like by which the molded article has been stretched from a difference between a conveyance speed on the upstream side and that on the downstream side. The monitoring apparatus 180 may include an image sensor for monitoring for a change in the size by photographing the external appearance of the molded article.

The monitoring apparatus 180 may include an optical inspection apparatus for determining the dispersion state of the filler contained in the molded article M2. The means for determining the dispersion state of the filler is not limited to any particular means, but may include, for example, means for detecting, when light having a single wavelength or a plurality of wavelengths is made to pass through the molded article M2, the intensity of the light that passed through the molded article M2. The means for determining the dispersion state of the filler may include, for example, means for detecting, when light having a single wavelength or a plurality of wavelengths is applied to the molded article M2, light having a specific wavelength among the light scattered by the molded article M2. The means for determining the dispersion state of the filler may include, for example, means for visually imaging the dispersion state of the filler by detecting, when light having a single wavelength or a plurality of wavelengths is applied to the molded article M2, at least one of light that has passed through the molded article M2, light reflected by the molded article M2, and light scattered by the molded article M2. In this case, the control apparatus 200 determines the stretching condition based on at least the dispersion state of the filler over a plurality of different areas on the molded article M2. In this way, the battery material manufacturing system 10 can determine the stretching condition while suitably determining whether or not voids are formed in the molded article in the stretching unit(s).

The monitoring apparatus 180 may include a temperature inspection apparatus for determining a distribution of temperatures (hereinafter also referred to as a temperature distribution) on the molded article M2. The means for determining the temperature distribution on the molded article M2 is not limited to any particular means, but may include, for example, means for detecting the intensity of far-infrared light emitted from the molded article M2. **In** this case, the control apparatus 200 determines the stretching condition at least based on the temperature dispersion state over a plurality of different areas of the molded article M2.

The control apparatus 200 determines the stretching condition under which no void is formed in the molded article according to the output of the monitoring apparatus 180, and controls the stretching apparatus within a range in which no void is formed in the molded article based on the determined stretching condition. In this way, the control apparatus 200 controls the stretching apparatus 160 based on the state of the molded article so that no void is formed therein. Further, the stretching apparatus 160 can stretch, i.e., draw, the molded article while preventing voids from being formed therein.

Note that in the battery material manufacturing apparatus 100, the stretching apparatus 160 may include a plurality of stretching units. The stretching apparatus 160 shown in Fig. 2 includes a first stretching unit 161 and a second stretching unit 162.

**In** the stretching apparatus 160, the first stretching unit 161 receives the molded article M2 at a conveyance speed V5 and sends out the molded article M2 at a conveyance speed V6. Further, the second stretching unit 162 receives the molded article M2 sent out from the first stretching unit 161 and sends out the molded article M2 at a conveyance speed V7. Note that the conveyance speed V6 is higher than the conveyance speed V5. Further, the conveyance speed V7 is higher than the conveyance speed V6. **In** this case, the control apparatus 200 controls the conveyances speeds V5, V6 and V7 under the condition that no voids are formed in the molded article according to the output of the monitoring apparatus 180.

The stretching apparatus 160 shown in Fig. 2 includes two stretching units. However, the stretching apparatus 160 may include three or more stretching units. By the above-described configuration, the battery material manufacturing apparatus 100 can perform stretching a plurality of times within the range in which no voids are formed. **In** this way, the battery material manufacturing apparatus 100 can manufacture a molded article having a desired thickness while keeping the state in which no void is formed in the molded article.

Further, in the battery material manufacturing apparatus 100 shown in Fig. 2, the monitoring apparatus 180 includes a first sensor 181 provided in an upstream area of the first stretching unit 161, a second sensor 182 provided in an intermediate area between the first and second stretching units 161 and 162, and a third sensor 183 provided in a downstream area of the second stretching unit 162. In this case, the control apparatus 200 controls the stretching apparatus 160 according to the outputs of the first, second and third sensors 181, 182 and 183. In this way, the battery material manufacturing apparatus 100 can perform stretching a plurality of times in the plurality of stretching units under the stretching condition under which no void is formed in the molded article.

The stretching apparatus 160 includes stretching rolls for sandwiching the molded article from the front and back thereof and thereby stretching the molded article. In this case, the control apparatus 200 controls the rotation speeds of the stretching rolls. In this way, the stretching apparatus 160 can suitably stretch the molded article. Note that the stretching apparatus 160 may include a guide roller(s) or the like for guiding the molded article.

In the battery material manufacturing apparatus 100, the monitoring apparatus 180 may include a sensor for measuring a tension exerted in the molded article. More specifically, the tension sensor measures a force applied in the direction in which the molded article M2 is pulled in the stretching apparatus 160 as a tension exerted in the molded article. In this case, the control apparatus 200 controls the stretching apparatus 160 within a range in which the aforementioned tension does not exceed a predetermined threshold tension.

In the battery material manufacturing apparatus 100, the monitoring apparatus 180 may include a sensor for monitoring a strain caused in the molded article. In this case, the control apparatus 200 controls the stretching apparatus 160 within a range in which a strain rate (or strain speed) in the molded article does not exceed a predetermined threshold rate.

The battery material manufacturing apparatus 100 has been described above. By the above-described configuration, the battery material manufacturing apparatus 100 can perform stretching after suitably determining a stretching condition(s) under which no void is formed in the molded article in the stretching unit(s). The battery material manufacturing apparatus 100 stretches the molded article M2 received from the sheet casting apparatus 140 so that its thickness is reduced to, for example, about 500 micrometers to 5 micrometers.

### (Configuration of Battery Material Manufacturing System)

Next, another configuration of a battery material manufacturing system 10 will be described. A raw material feeding unit 110 stores a raw material M1 and supplies it to an extruder 120 through a supply port. The raw material feeding unit 110 may be a container called a hopper. The raw material feeding unit 110 may include a rotary valve. The raw material M1 is pellets of a conductive resin obtained by kneading a resin, which serves as a base material, and a conductive filler. The raw material M1 contains, for example, 50 wt% or more of a conductive filler as the filler. Note that the shape and size of pellets of the raw material M1 are not limited to any particular shape and size. In the case where the shape is a lump-like shape, a diagonal length is preferably 0.1 mm to 50 mm, and more preferably 1 to 20 mm.

The extruder 120 receives the raw material M1, kneads the received raw material M1, and supplies the kneaded material to a pump unit 130. The pump unit 130 supplies the kneaded material received from the extruder 120 to the sheet casting apparatus 140. The pump unit 130 is, for example, a gear pump. By the above-described configuration, the extruder 120 can suitably knead the raw material and supply (pressure-feed) the kneaded material of the raw material M1 to the sheet casting apparatus 140 with a predetermined pressure.

The sheet casting apparatus 140 receives the kneaded material of the raw material M1 from the pump unit 130 and continuously sends out a sheet-like molded article M2. Specifically, the sheet casting apparatus 140 includes a mold(s) called a T-die(s). The sheet casting apparatus 140 includes a receiving port 141, an expanding part 142, and a sending-out port 143. The receiving port 141 receives a kneaded material in a fluid state obtained by kneading a base material and a filler. The expanding part 142 guides the kneaded material in the sending-out direction while expanding the kneaded material in a direction perpendicular to the sending-out direction. The sending-out port 143 is a slit-like opening through which the expanded kneaded material can be continuously sent out as a molded article. The sheet casting apparatus 140 supplies the sheet-like molded article M2 to the battery material manufacturing apparatus 100 through the cast roller 150. Note that the thickness of the molded article M2 sent out from the sending-out port 143 is about 1,000 micrometers to 1,500 micrometers.

The sheet casting apparatus 140 may include a temperature control apparatus in addition to the above-described configuration. Further, the sheet casting apparatus 140 may also include a degassing unit. The degassing unit extracts, inside the sheet casting apparatus 140, gas which are contained as bubbles in the raw material M1.

The degassing unit includes, as its main components, a branching part, a branching pipe, a storage part, and a leading-out pipe. The branching part is a flow path provided in a flow path for the composition in the sheet casting apparatus 140. The purpose of the branching part is to extract gas such as bubbles contained in the raw material M1. Therefore, such a branching part can be provided in each of a plurality of places in the sheet casting apparatus 140.

The branching pipe is a pipe for guiding at least gas contained in the raw material M1 from the branching part. The cross-sectional area of the flow path of the branching pipe is not limited to any particular area, i.e., any particular size, but the flow path preferably has a cross-sectional area according to the flow velocity at which the raw material M1 passes through the sheet casting apparatus 140. Therefore, the branching pipe may include a valve for adjusting the cross-sectional area of the flow path of the branching pipe at at least one place on the flow path. Note that the valve preferably has a mechanism for adjusting its degree of opening, i.e., the size of the opening, according to an electric signal.

The storage part is connected to the branching pipe, is disposed above the branching part, and is a predetermined space having a cross-sectional area of the flow path larger than that of the flow path of the branching pipe. By the above-described configuration, the degassing unit can prevent the raw material M1 from flowing beyond the storage part even when the raw material M1 itself flows into the branching pipe from the branching part.

The leading-out pipe guides gas accumulated in the storage part to the outside of the sheet casting apparatus 140. The leading-out pipe is connected to, for example, a vacuum pump. In this way, the degassing unit sucks gas contained in the raw material M1. Note that the vacuum pump may be connected to a plurality of leading-out pipes. The storage part may be connected to a plurality of branching pipes. By the above-described configuration, the battery material manufacturing system 10 can prevent bubbles from being formed in the battery material.

The cast roller 150 receives the molded article M2 on its roller surface while rotating, and sends out the received molded article M2 to the next step. The cast roller 150 comes into contact with the molded article M2, and by doing so, cools and solidifies the molded article M2. The cast roller may include a temperature control unit for adjusting the temperature of the molded article M2 to a predetermined temperature. The cast roller 150 supplies the received molded article M2 to the battery material manufacturing apparatus 100. Note that the cast roller 150 may further include a rotational drive unit, a displacement drive unit, and a drive control unit, and thereby be able to adjust the degree of solidification of the molded article M2 and the degree of stretching thereof. In this case, for example, the cast roller 150, while receiving and winding the sheet-like molded article sent out from the sending-out port at a fourth conveyance speed, sends out the received molded article. Further, the rotational drive unit rotationally drives the cast roller 150 so as to send out the molded article M2 at a fifth conveyance speed higher than the fourth conveyance speed. The cast roller 150, the rotational drive unit, the displacement drive unit, and the drive control unit may be collectively referred to as a cast block. By the above-described configuration, the cast roller 150 can stretch the molded article M2 while cooling it.

The rotational drive unit and the drive control unit control, i.e., adjust, the speed of the molded article over the surface of the cast roller 150 to a predetermined speed. For example, the cast roller sends out the molded article M2 received at a speed V1 at a speed V2. Note that the speed V2 is set to a value higher than the speed V1. Note that the rotational drive unit includes a motor for rotating the cast roller 150 and a sensor or the like for measuring the rotation speed of the cast roller 150.

The displacement drive unit displaces, i.e., shifts the position of, the cast roller 150 in the Z-axis direction (i.e., in the vertical direction) in Fig. 2 and in the X-axis direction (i.e., in the horizontal direction or in the thickness direction of the molded article M2 sent out in the form of a sheet) in Fig. 2. More specifically, the displacement drive unit includes, for example, a linear rail(s) along each of the Z- and X-axis directions on which the cast roller 150 can be moved, a bearing that is engaged with the linear rail(s) and supports the cast roller 150, and a motor for driving this bearing along the linear rail(s). The displacement drive unit displaces the cast roller 150 in response to a control signal received from the drive control unit. In this way, the cast roller 150 can suitably adjust the condition(s) for solidifying and stretching the molded article M2. Specifically, the displacement drive unit adjusts the temperature of the molded article M2 in contact with the cast roller 150 by adjusting the position of the cast roller 150 in the vertical direction (Z-axis direction), and thereby adjusts the degree of solidification of the molded article M2. Further, the displacement drive unit adjusts the position of the cast roller 150 in contact with the molded article M2 by adjusting the position of the cast roller 150 in the horizontal direction (X-axis direction), and thereby adjusts the degree of stretching, i.e., stretching, of the molded article M2. Note that the displacement drive unit may change the position of the cast roller 150 according to the composition of the molded article M2.

The drive control unit includes drive circuits for driving the rotational drive unit and the displacement drive unit, respectively, and arithmetic circuits for driving the rotational drive unit and the displacement drive unit, respectively, according to data on the rotation speed and position of the cast roller 150 received from the rotational drive unit and the displacement drive unit.

By the above-described configuration, the cast roller 150 stretches the molded article M2 which is sent out from the sheet casting apparatus 140 and is in a high-temperature and flowable state while cooling the molded article M2. In general, when a resin is molded into a film and stretched, i.e., drawn, the resin is stretched in a solidified state. When the filler-containing sheet-like molded article M2 is stretched in a solidified state, especially when a thick sheet, e.g., a sheet having a thickness of 1 mm, like the one that has just been sent out from the sheet casting apparatus 140 is stretched, there is a possibility that the sheet may be broken, e.g., ripped, during the stretching or that the thickness of the sheet may become uneven. In order to prevent such defects or the like, it is necessary to stretch the molded article at a relatively low speed in the later step of the sheet casting apparatus 140. By the above-described configuration, the battery material manufacturing system 10 can perform a small amount of stretching in a molten state, and can uniformly stretch the sheet-like molded article M2 into a sheet having a large width at a high speed. For example, by the above-described configuration, the cast roller 150 stretches a molded article M2 having a thickness of 1,000 micrometers so that its thickness is reduced to 850 micrometers.

The rolling system 190 includes, as its main components, a first rolling apparatus 191, a second rolling apparatus 192, and a third rolling apparatus 193. The rolling system 190 receives the molded article M2 sent out from the cast roller 150 at the speed V2, and have the first rolling apparatus 191 roll, i.e., press and stretch, the received molded article M2. The first rolling apparatus 191 sandwiches the molded article M2 from the front and back thereof by rolling rollers, and sends out the molded article M2 at a speed V3 while compressing it.

The second rolling apparatus 192 receives the molded article M2 rolled by the first rolling apparatus 191 at the speed V3, and sends out the received molded article M2 at a speed V4 while further compressing it. The third rolling apparatus 193 receives the molded article M2 rolled by the second rolling apparatus 192 at the speed V4, and sends out the molded article M2 at a speed V5 while further compressing it.

Note that the sending-out speeds of the rolling apparatuses are not limited to any particular speeds, but the sending-out speeds are preferably set in such a manner that the more the rolling apparatus is located on the downstream side, the higher the sending-out speed of the rolling apparatus is. For example, the sending-out speeds are preferably set so that they are expressed as V2<V3<V4<V5. By individually controlling the speed of each rolling apparatus of the rolling system 190 as described above, the rolling system 190 can combine the force for pressing and spreading the molded article M2 with respect to the thickness direction and the force for stretching the current collector P10 with respect to the sending-out direction with each other. As a result, the use of the rolling system 190 makes it possible to swiftly process the molded article M2 and reduce its thickness. Therefore, the battery material manufacturing system 10 can improve the productivity.

In addition to the above-described configuration, the rolling system 190 may further include a heating apparatus. Further, it is sufficient if the rolling system 190 includes at least one rolling apparatus. The rolling system 190 rolls, i.e., reduces, the thickness of the molded article M2 received from the cast roller 150 to, for example. about 850 micrometers to 500 micrometers.

The winding apparatus 170 receives the molded article M2 sent out from the battery material manufacturing apparatus 100, and winds the received molded article M2 into a roll.

The configuration of the battery material manufacturing system 10 has been described above. **In** the above-described configuration, the battery material manufacturing system 10 stretches a battery material that has been molded into a sheet in a stepwise manner. **In** this way, the battery material manufacturing system 10 can continuously and efficiently manufacture a battery material while preventing voids from being formed therein.

Note that the battery material manufacturing system 10 may further include a step of cutting the molded article M2 by a cutting apparatus using a cutter or a cutting roller and thereby manufacturing molded articles M2 that have been cut into sheet-like shapes. Alternatively, the battery material manufacturing system 10 may further include a step of laminating a plurality of molded articles M2 or a plurality of sheet-like battery materials, and/or a step of encapsulating them. That is, the battery material manufacturing system 10 may include a laminating molding system for manufacturing a laminate by laminating (or stacking) sheet-like objects to be laminated including at least one cut molded article M2 on one another.

Further, the battery material manufacturing system 10 may also include a laminating molding system for aligning and laminating a plurality of cut molded articles M2 which are objects to be laminated. The plurality of molded articles M2 may have the same composition as each other or compositions different from each other. The plurality of molded articles M2 may be, for example, a positive electrode current collector P11 and a current collecting base material P12, or a current collector P10 and a current collecting base material P12. The sheet-like battery material is, for example, a resin such as a conductive polymer or a separator with microscopic voids formed therein. The sheet-like battery material is, for example, a metal such as aluminum foil or copper foil. Note that the step of encapsulating battery materials may be a step of encapsulating battery materials including a molded article M2 by an outer-sheath material made of a resin or a metal. In this case, the step of encapsulating battery materials may be one in which the adhesiveness of the outer-sheath material is enhanced by disposing a frame-like thermosetting resin between first metal foil and second metal foil.

The step of bonding or encapsuling battery materials may be carried out by the laminating molding system. The laminating molding system includes a vacuum chamber of a vertical opening/closing type, and presses objects to be laminated including a cut molded article M2 under a reduced-pressure environment. Specifically, the laminating molding system receives, for example, rectangular objects to be laminated, each of which was cut to a size having each side of about 50 to 600 mm, from one end thereof. Next, the laminating molding system closes the vacuum chamber and thereby makes the inside of the vacuum chamber airtight, and then reduces the pressure inside the vacuum chamber to a predetermined air pressure by using a vacuum pump or the like. The predetermined air pressure is, for example, 1 hectopascal or lower. Next, in the vacuum chamber, a predetermined area on the objects to be laminated is pressed with a predetermined pressure. The predetermined pressure is, for example, 0.1 to 10 megapascal. Lastly, the laminating molding system sends out the objects to be laminated from the other end thereof and receives the next objects to be laminated from the one end thereof. Note that the laminating molding system includes a control unit for controlling a series of operations and adjusting the atmosphere inside the vacuum chamber. This control unit may be included in the control apparatus 200 described above.

The means for carrying objects to be laminated into the laminating molding system and sending out the objects to be laminated therefrom is not limited to any particular means. For example, such means can be suitably implemented by placing objects to be laminated over a polyethylene terephthalate (PET) sheet inserted into a vacuum chamber and intermittently moving the sheet in conjunction with the operation of the vacuum chamber or the like. Further, the pressing means of the laminating molding system is not limited to any particular means. For example, such means may be one in which upper and lower pressing plates are hydraulically or electrically raised and lowered, or may be one including means for supplying gas so that a predetermined pressure is obtained. Alternatively, the pressing means may one using expansion and contraction of a diaphragm-like flexible sheet made of a heat-resistant polymer. Note that in the case where a frame-like thermosetting resin is disposed between the first and second metal foil, and the battery material, which is a laminate (or stack) containing a molded article M2, is encapsulated, the battery material manufacturing system 10 preferably includes a frame-like pressing surface over one of the upper and lower pressing plates. In this case, there are projections and depressions due to electrode tabs and the like in the place where the outer-sheath material is bonded. Therefore, in order to conform to such projections and depressions, for example, the lower pressing surface is preferably formed of a metal board that was subjected to mirror processing, and the upper pressing surface is preferably formed of a metal board including a frame-like heat-resistant resin or heat-resistant rubber.

Further, the laminating molding system may include a temperature adjusting mechanism such as a heater or a heating medium for adjusting the temperature of the objects to be laminated. The temperature adjusting mechanism may be included in the mechanism for pressing the objects to be laminated, or may be provided at other places. The temperature adjusting mechanism adjusts the temperature of the objects to be laminated so as to fall within a range of, for example, a normal temperature to about 200°C. In this way, the laminating molding system can suitably bond or encapsulate battery materials.

As a result, the laminating molding system can prevent defects in lamination, such as residual bubbles, in gaps between objects to be laminated, and can bond or encapsulate the battery materials including the molded article M2 with satisfactory productivity.

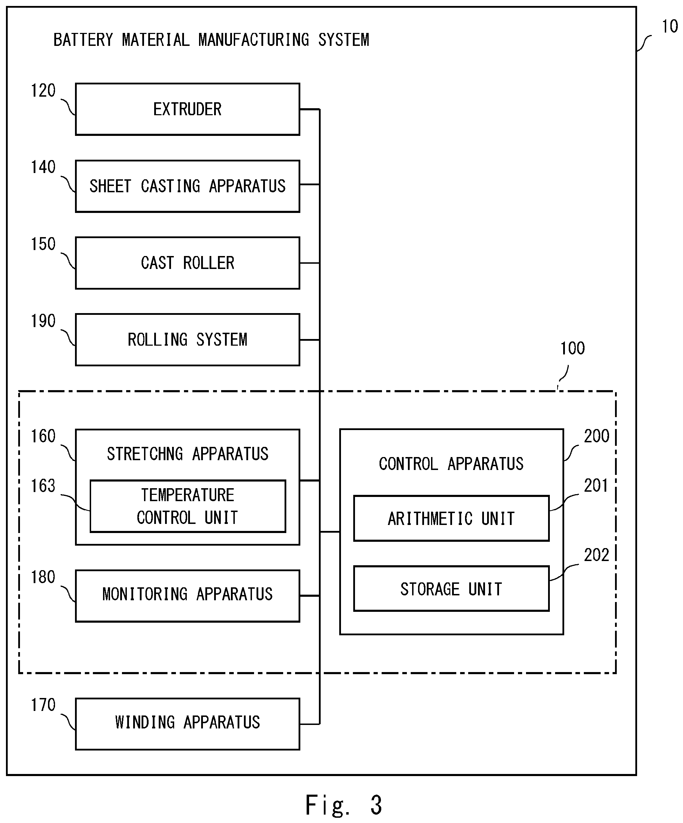

Next, the functional configuration of the battery material manufacturing system 10 will be further described with reference to Fig. 3. Fig. 3 is a block diagram of the battery material manufacturing system 10. The battery material manufacturing system 10 includes, as its main components, a battery material manufacturing apparatus 100, an extruder 120, a sheet casting apparatus 140, a cast roller 150, and a winding apparatus 170. The components shown in Fig. 3 are connected as appropriate so that they can communicate. As shown in Fig. 3, the extruder 120, the sheet casting apparatus 140, the cast roller 150, and the winding apparatus 170 are connected to the control apparatus 200 of the battery material manufacturing apparatus 100 so that they can communicate therewith. That is, each of these components is controlled by the control apparatus 200.

The stretching apparatus 160 according to this embodiment may include a temperature control unit 163 for controlling the temperature of the molded article. The temperature control unit 163 controls the atmosphere around the stretching apparatus 160 so that the molded article M2 has a predetermined temperature. The temperature control unit 163 controls the temperature of the stretching apparatus 160 in cooperation with the control apparatus 200. Note that in this case, the monitoring apparatus 180 includes a temperature sensor. Further, the control apparatus 200 determines the stretching condition according to the temperature of the molded article. In this way, the battery material manufacturing system 10 can set a more efficient and robust stretching condition(s).

The control apparatus 200 includes an arithmetic apparatus such as a CPU (Central Processing Unit) or an MCU (Micro Controller Unit). The control apparatus 200 includes an arithmetic unit 201 and a storage unit 202. The control apparatus 200 determines the stretching condition based on data received from the monitoring apparatus 180, which monitors the state of the molded article, and controls the stretching apparatus so that no void is formed in the molded article.

The arithmetic unit 201 determines the stretching condition based on data received from the monitoring apparatus 180 and selects or calculates parameters for controlling each component of the battery material manufacturing system 10 according to the result of the determination. For example, the arithmetic unit 201 calculates a yield time at which at least a part of a monitored part set in the molded article reaches a yield tension after starting the stretching, and a completion time at which the stretching step in the monitored part is completed. In this case, when the yield time is earlier than the completion time, the control apparatus 200 controls the stretching apparatus so as to change the stretching speed. On the other hand, when the yield time is later than the completion time, the control apparatus 200 controls the stretching apparatus so as to maintain the stretching speed.

Further, the control apparatus 200 connects to each component of the battery material manufacturing system 10 so as to be able to communicate therewith, and has a function of controlling each component. In this way, the battery material manufacturing system 10 can cooperate with the sheet casting apparatus 140 and the battery material manufacturing apparatus 100, so that it can manufacture the battery material more efficiently. Note that the means for connecting so as to be able to communicate may be a wireless communication or a wired communication. Further, the control apparatus 200 preferably includes a display for visually displaying the control status of each component of the battery material manufacturing system 10. Further, the control apparatus 200 may visually display the status of each component of the battery material manufacturing system 10 on a medium other than the display provided in the control apparatus 200 through wireless communication. The medium other than the display provided in the control apparatus 200 may be, for example, a personal computer, a tablet computer, or a smartphone. In this case, the battery material manufacturing system 10 is more preferably able to remotely perform, change, or stop the control of each component of the battery material manufacturing system 10 through such a medium or software installed in such a medium.

The storage unit 202 is a storage device including at least a nonvolatile memory such as a flash memory or an SSD (Solid State Drive). At least a program executed by the control apparatus 200 is stored in the storage unit 202. Further, data on the stretching condition determined by the control apparatus 200 is also stored in the storage unit 202. That is, the control apparatus 200 controls the stretching apparatus 160 by referring to data received from the monitoring apparatus 180 and data on the stretching condition stored in the storage unit 202. Further, the storage unit 202 may also include an interface for electronically or visually outputting past data to the outside.

The functional configuration of the battery material manufacturing system 10 has been described above. By the above-described configuration, the battery material manufacturing apparatus 100 can stretch a molded article while preventing voids from being formed therein. Therefore, the battery material manufacturing system 10 can continuously manufacture a battery material. Note that the battery material manufacturing system 10 may include two or more control apparatuses 200. In this case, the battery material manufacturing system 10 may control the battery material manufacturing system 10 by having a plurality of control apparatuses connect to each other so that they can communicate with each other, and cooperate with each other.

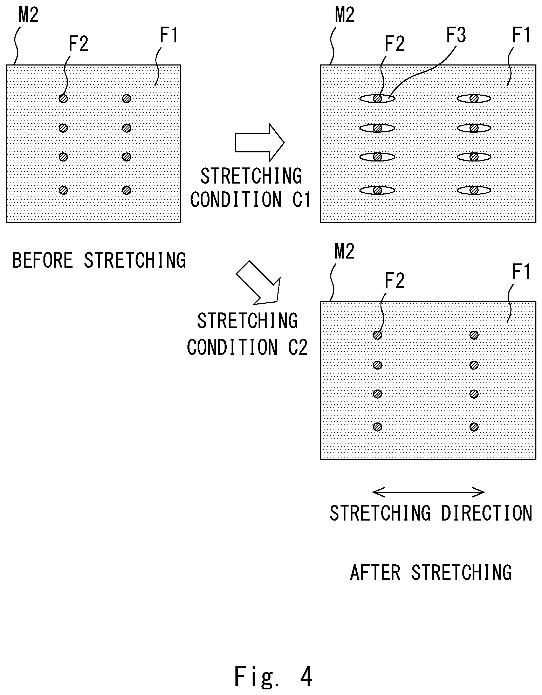

Next, the states of the molded article before and after the stretching will be described with reference to Fig. 4. Fig. 4 is a diagram for explaining states of a molded article. A molded article M2 before stretching is shown on the left side of Fig. 4. Note that in the molded article M2 before the stretching, a filler F2 is dispersed in a base material F1.

The molded article M2 after stretching performed under a stretching condition C1 is shown in the upper right part of Fig. 4. The stretching condition C1 is a condition under which voids are formed in the molded article. Therefore, voids F3 are formed around dispersed fillers F2 in the molded article M2 after the stretching.

The molded article M2 after stretching performed under a stretching condition C2 is shown in the lower right part of Fig. 4. The stretching condition C2 is a condition under which no void is formed in the molded article. Therefore, voids F3 are not formed around dispersed fillers F2 in the molded article M2 after the stretching.

As described above, voids may or may not be formed in the molded article M2 after the stretching depending on the stretching condition. Therefore, the battery material manufacturing apparatus 100 determines a stretching condition under which no void is formed, and then stretches the molded article under the determined stretching condition.

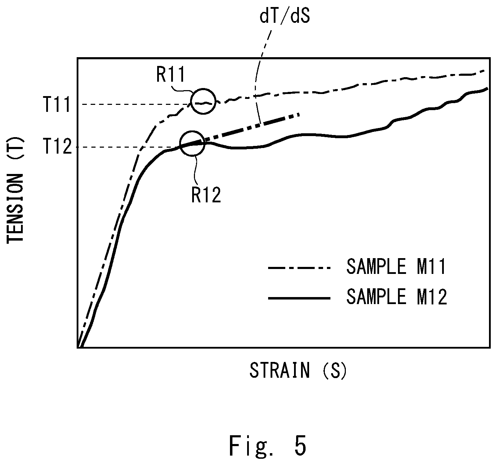

Next, the stretching condition will be described by referring to a relationship between the strain and the tension of the molded article with reference to Fig. 5. Fig. 5 is a first graph showing a relationship between the strain and the tension of a molded article. In the graph shown in Fig. 5, the horizontal axis indicates the strain (S), and the vertical axis indicates the tension (T).

In the graph, data on a sample M11 is plotted by a dashed line. In the data on the sample M11, a point R11 indicated by a circle is a boundary as to whether voids are formed or not. That is, voids are formed in the sample M11 when a tension higher than the tension T11 is exerted.

Further, in the graph, data on a sample M12 is indicated by a solid line below the data on the sample M11. In the data on the sample M12, a point R12 indicated by a circle is a boundary as to whether voids are formed or not. That is, voids are formed in the sample M12 when a tension higher than the tension T12 is exerted.

As shown in Fig. 5, there are variations in plotted data according to the sample. Therefore, when a molded article is stretched while monitoring the tension exerted in the molded article, the battery material manufacturing apparatus 100 sets, for example, a threshold tension Tth to a value lower than the tension T12. In this way, the battery material manufacturing apparatus 100 can stretch the molded article while applying a tension lower than the threshold tension Tth under the condition that no void is formed.

Next, variations of the stretching condition will be described. At the point R12 of the sample M12, an oblique straight line indicated by a bold double dashed line indicates the change rate dT/dS between the strain S and the tension T. Although the tension exerted in the sample M11 when voids are formed is different from the tension exerted in the sample M12 when voids are formed, their change rates dT/dS between the strain S and the tension T are roughly equal to each other. Therefore, the battery material manufacturing apparatus 100 can set, for example, a threshold for the change rate dT/dS between the strain S and the tension T. In this way, the battery material manufacturing apparatus 100 can stretch the molded article while monitoring the change rate dT/dS between the strain S and the tension T.

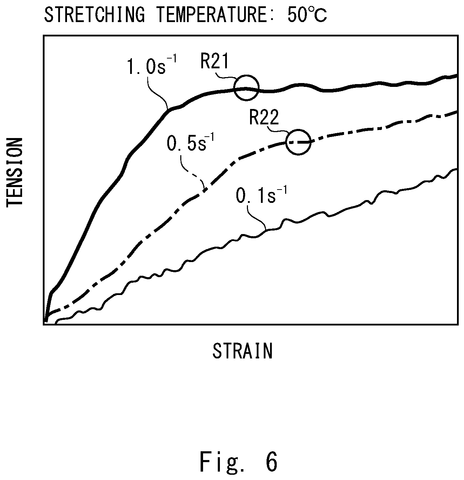

Next, the temperature at which the molded article is stretched and the strain rate (or strain speed) in the molded article will be described the with reference to Fig. 6. Fig. 6 is a second graph showing a relationship between the strain and the tension of a molded article. Similarly to the graph shown in Fig. 5, in the graph shown in Fig. 6, the horizontal axis indicates the strain, and the vertical axis indicates the tension. Further, the graph in Fig. 6 shows a case where the atmosphere or the temperature (stretching temperature) of the molded article during the stretching is 50°C.

In Fig. 6, data for a strain rate of 1.0 s⁻¹ is plotted by a bold solid line. In this case, voids are formed in the molded article when the molded article is subjected to a strain larger than the strain at the point R21. Further, data for a strain rate of 0.5 s⁻¹ is plotted by a bold dashed line below the data for the strain rate of 1.0 s⁻¹. In this case, voids are formed in the molded article when the molded article is subjected to a strain larger than the strain at the point R22. Further, data for a strain rate of 0.1 s⁻¹ is plotted by a thin solid line below the data for the strain rate of 0.5 s⁻¹. In this case, no void is formed in the molded article in the range of the strain shown in the graph.

As described above, when the stretching temperature is 50°C and the strain rate in the molded article is different, the condition under which voids are formed in the molded article (i.e., the stretching condition) is different.

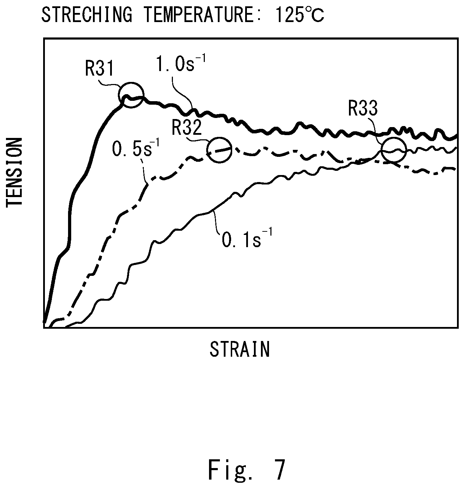

Fig. 7 is a third graph showing a relationship between the strain and the tension of a molded article. Similarly to the above-shown graphs, in the graph shown in Fig. 7, the horizontal axis indicates the strain, and the vertical axis indicates the tension. Further, the graph shown in Fig. 7 shows a case where the stretching temperature is 125°C.

In Fig. 7, data for a strain rate of 1.0 s⁻¹ is plotted by a bold solid line. In this case, voids are formed in the molded article when the molded article is subjected to a strain larger than the strain at the point R31. Further, data for a strain rate of 0.5 s⁻¹ is plotted by a bold dashed line below the data for the strain rate of 1.0 s⁻¹. In this case, voids are formed in the molded article when the molded article is subjected to a strain larger than the strain at the point R32. Further, data for a strain rate of 0.1 s⁻¹ is plotted by a thin solid line below the data for the strain rate of 0.5 s⁻¹. In this case, voids are formed in the molded article when the molded article is subjected to a strain larger than the strain at the point R33.

As described above, when a molded article is stretched, the condition under which voids are formed depends on the stretching temperature. Further, when a molded article is stretched, the condition under which voids are formed also depends on the strain rate. Therefore, in the battery material manufacturing apparatus 100, the control apparatus 200 receives these data from the monitoring apparatus 180, determines the stretching condition according to the received data, and controls the stretching apparatus 160 under the determined stretching condition. In this way, the battery material manufacturing apparatus 100 can efficiently perform the stretching of the molded article while preventing voids from being formed therein.

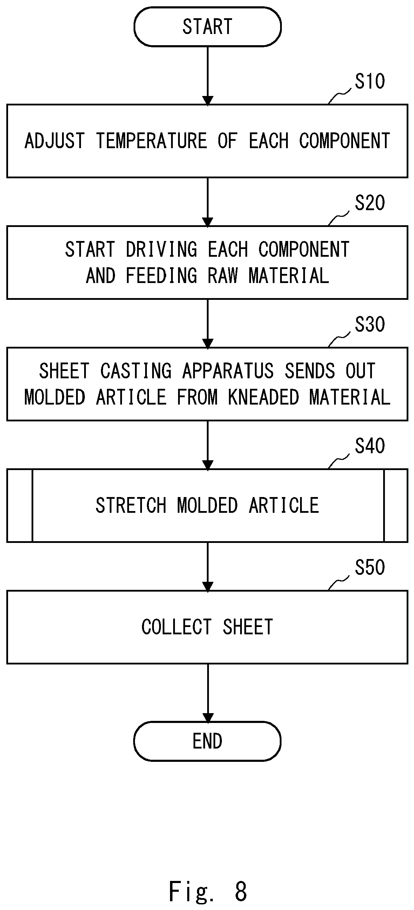

Next, processes performed by the battery material manufacturing system 10 will be described with reference to Fig. 8. Fig. 8 is a flowchart of a battery material manufacturing method.

Firstly, the battery material manufacturing system 10 adjusts the temperature of each component according to an operation performed by a user (Step S10). Note that in this case, the battery material manufacturing system 10 adjusts the temperatures of the sheet casting apparatus 140, the cast roller 150, and the like in addition to the temperature of the battery material manufacturing apparatus 100.

Next, the battery material manufacturing system 10 starts driving each component and feeding a raw material (Step S20). Specifically, the battery material manufacturing system 10 starts driving, for example, the stretching rollers of the stretching apparatus 160. Alternatively, the battery material manufacturing system 10 starts driving a screw provided in the extruder 120. Then, the battery material manufacturing system 10 feeds a raw material M1 into the extruder 120.

Next, the battery material manufacturing system 10 has the sheet casting apparatus 140 send out a molded article M2 molded from the kneaded material (Step S30). Further, the battery material manufacturing system 10 supplies the molded article M2 to the battery material manufacturing apparatus 100 and thereby stretches the molded article M2 (Step S40).

Next, the battery material manufacturing system 10 makes the winding apparatus 170 wind up the molded article sent out from the battery material manufacturing apparatus 100 and thereby collect the molded article (Step S50).

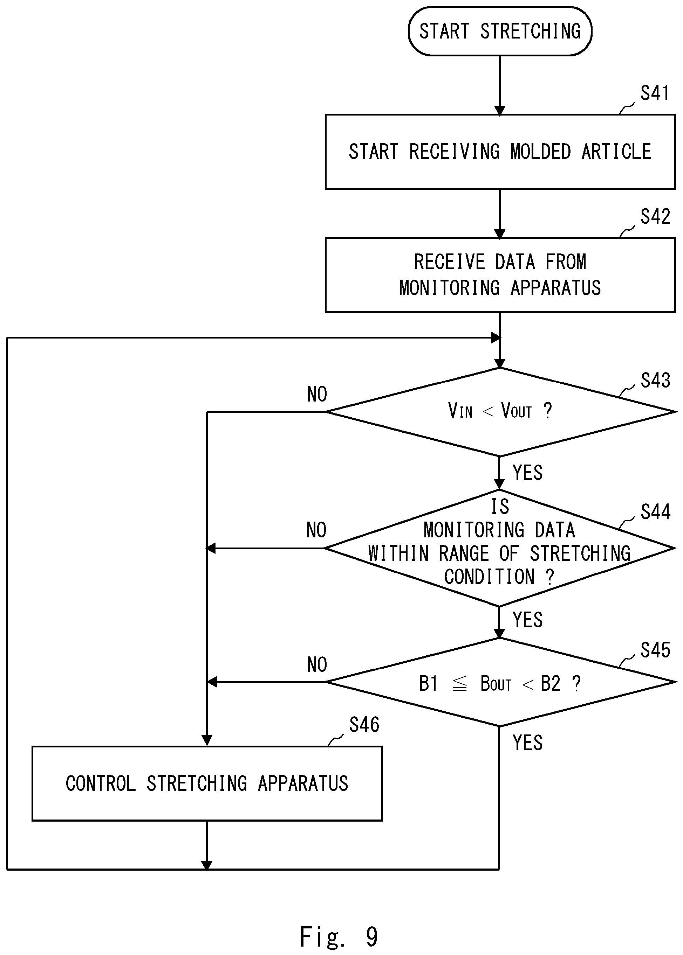

Next, processes performed by the battery material manufacturing apparatus 100 will be described with reference to Fig. 9. Fig. 9 is a flowchart showing a method for controlling the stretching apparatus. The flowchart shown in Fig. 9 shows details of the step S40 shown in Fig. 8.

Firstly, the battery material manufacturing apparatus 100 starts receiving a molded article M2 (Step S41). More specifically, the battery material manufacturing apparatus 100 receives, from the sheet casting apparatus 140 which continuously sends out a sheet-like molded article M2 obtained by kneading a base material and a filler, the sheet-like molded article M2 through the cast roller 150. Note that the battery material manufacturing apparatus 100 stretches the received molded article M2 so that the thickness thereof is reduced. Specifically, for example, the battery material manufacturing apparatus 100 receives the molded article M2 at a first conveyance speed and, while conveying the received molded article M2, sends out the molded article M2 at a second conveyance speed. In this way, the molded article M2 is stretched so that the thickness thereof is reduced.

Next, the control apparatus 200 receives data from the monitoring apparatus 180 (Step S42). Note that the monitoring apparatus 180 generates, among the various data described above, data that conforms to the method for determining a predetermined stretching condition, and supplies the generated data to the control apparatus 200. Further, as the above-described process is performed, the control apparatus 200 receives the data conforming to the method for determining the predetermined stretching condition from the monitoring apparatus 180. That is, the control apparatus 200 acquires monitoring data from the monitoring apparatus 180 which monitors at least one of a tension exerted in the molded article, a strain caused in the molded article, and the thickness of the molded article at each of a plurality of different positions on the molded article.

Next, the control apparatus 200 determines whether or not a sending-out speed V_{OUT} when sending the molded article M2 in the stretching apparatus 160 is higher than a receiving speed V_{IN} when receiving the molded article M2 (Step S43). When it is determined that the sending-out speed V_{OUT} is higher than the receiving speed V_{IN} (Step S43: Yes), the battery material manufacturing apparatus 100 proceeds to a step S44. When it is not determined that the sending-out speed V_{OUT} is higher than the receiving speed V_{IN} (Step S43: No), the battery material manufacturing apparatus 100 proceeds to a step S46.

In the step S44, the control apparatus 200 determines whether or not the monitoring data received from the monitoring apparatus 180 is within the range of the stretching condition. When it is within the range of the stretching condition, no void has been formed in the molded article M2. On the other hand, when it is not within the range of the stretching condition, there is a possibility that voids have been formed in the molded article M2. Therefore, when the control apparatus 200 determines that the monitoring data is within the range of the stretching condition (Step S44: Yes), the battery material manufacturing apparatus 100 proceeds to a step S45. On the other hand, when the control apparatus 200 does not determine that the monitoring data is within the range of the stretching condition (Step S44: No), the battery material manufacturing apparatus 100 proceeds to the step S46.

In the step S45, the control apparatus 200 determines whether or not the thickness B_{OUT} of the molded article M2 at the position at which the molded article is sent out from the stretching apparatus 160 is within the range of the required specifications of the product. More specifically, the control apparatus 200 determines whether or not the thickness B_{OUT} of the molded article M2 received from the monitoring apparatus 180 is a thickness B1 or larger and smaller than a thickness B2 (Step S45). When the control apparatus 200 determines that the thickness B_{OUT} of the molded article M2 is the thickness B1 or larger and smaller than the thickness B2 (Step S45: Yes), the battery material manufacturing apparatus 100 returns to the step S43 and continues the monitoring for the stretching condition. On the other hand, when the control apparatus 200 does not determine that the thickness B_{OUT} of the molded article M2 is the thickness B1 or larger and smaller than the thickness B2 (Step S45: No), the battery material manufacturing apparatus 100 proceeds to the step S46.

In the step S46, the control apparatus 200 controls the stretching apparatus 160 (Step S46). Note that the control of the stretching apparatus 160 is changed depending on the status or the like of the monitoring data. The control apparatus 200 changes, for example, at least one of the conveyance speed and the stretching temperature of the stretching apparatus 160. After the control apparatus 200 controls the stretching apparatus 160, the battery material manufacturing apparatus 100 returns to the step S43 and continues the monitoring of the molded article M2 and the control of the stretching apparatus 160.

As described above, the control apparatus 200 determines a stretching condition under which no void is formed in the molded article M2 according to the monitoring data, and controls the stretching apparatus 160 based on the determined stretching condition. In this way, the battery material manufacturing apparatus 100 can continuously and efficiently manufacture a battery material while preventing voids from being formed therein.

Note that in the above-described configuration of the battery material manufacturing system, the shapes of rollers are not limited to a cylindrical shape or a columnar shape, but may be a polyhedron shape or a cogwheel shape. Further, the rollers may be oscillated or vibrated by a motor(s) or the like while controlling their amplitudes or frequencies to predetermined amplitudes or frequencies. In this way, the battery material manufacturing system 10 can suitably solidify, roll, stretch, and wind the molded article M2.

Although the present invention is described above with reference to example embodiments, the present invention is not limited to the above-described example embodiments. Various modifications that can be understood by those skilled in the art can be made to the configuration and details of the present invention within the scope and spirit of the invention.

This application is based upon and claims the benefit of priority from Japanese patent application No. 2022-188312, filed on November 25, 2022, the disclosure of which is incorporated herein in its entirety by reference.

### Reference Signs List

- 10: BATTERY MATERIAL MANUFACTURING SYSTEM
- 100: BATTERY MATERIAL MANUFACTURING APPARATUS
- 110: RAW MATERIAL FEEDING UNIT
- 120: EXTRUDER
- 130: PUMP UNIT
- 140: SHEET CASTING APPARATUS
- 141: RECEIVING PORT
- 142: EXPANDING PART
- 143: SENDING-OUT PORT
- 150: CAST ROLLER
- 160: STRETCHING APPARATUS
- 161: FIRST STRETCHING UNIT
- 162: SECOND STRETCHING UNIT
- 163: TEMPERATURE CONTROL UNIT
- 170: WINDING APPARATUS
- 180: MONITORING APPARATUS
- 181: FIRST SENSOR
- 182: SECOND SENSOR
- 183: THIRD SENSOR
- 190: ROLLING SYSTEM
- 191: FIRST ROLLING APPARATUS
- 192: SECOND ROLLING APPARATUS
- 193: THIRD ROLLING APPARATUS
- 200: CONTROL APPARATUS
- 201: ARITHMETIC UNIT
- 202: STORAGE UNIT
- F1: BASE MATERIAL
- F2: FILLER
- F3: VOID
- M1: RAW MATERIAL
- M2: MOLDED ARTICLE
- P10: COLLECTOR
- P11: POSITIVE ELECTRODE COLLECTOR
- P12: COLLECTING BASE MATERIAL
- P13: NEGATIVE ELECTRODE COLLECTOR
- P20: POSITIVE ELECTRODE LAYER
- P30: SEPARATOR
- P40: NEGATIVE ELECTRODE LAYER
- P100: BATTERY

## Claims

1. A battery material manufacturing apparatus comprising:
a stretching apparatus configured to receive a sheet-like molded article from a sheet casting apparatus at a first conveyance speed and send out the received molded article at a second conveyance speed higher than the first conveyance speed, thereby reducing a thickness of the molded article, the molded article being obtained by kneading a base material and a filler, and the sheet casting apparatus being configured to continuously send out the molded article; and
a monitoring apparatus configured to generate monitoring data by monitoring at least one of a tension exerted in the molded article, a strain caused in the molded article, and a thickness of the molded article at each of a plurality of different positions on the molded article in order to determine a stretching condition under which no void is formed in the molded article, and output the generated monitoring data to a control apparatus configured to control the stretching condition.

2. The battery material manufacturing apparatus according to claim 1, further comprising a control apparatus configured to determine the stretching condition under which no void is formed in the molded article according to an output of the monitoring apparatus and control the stretching apparatus based on the determined stretching condition.

3. The battery material manufacturing apparatus according to claim 2, wherein
the stretching apparatus includes a first stretching unit configured to receive the molded article at the first conveyance speed and send out the molded article at the second conveyance speed, and a second stretching unit configured to receive the molded article sent out from the first stretching unit and send out the molded article at a third conveyance speed higher than the second conveyance speed, and
the control apparatus controls the first, second, and third conveyance speeds according to the output of the monitoring apparatus.

4. The battery material manufacturing apparatus according to claim 3, wherein
the monitoring apparatus includes a first sensor provided in an upstream area of the first stretching unit, a second sensor provided in an intermediate area between the first and second stretching units, and a third sensor provided in a downstream area of the second stretching unit, and
the control apparatus controls the stretching apparatus according to outputs of the first, second, and third sensors.

5. The battery material manufacturing apparatus according to any one of claims 2 to 4, wherein
the monitoring apparatus includes a sensor configured to measure a tension exerted in the molded article, and
the control apparatus controls the stretching apparatus within a range in which the measured tension does not exceed a predetermined threshold tension.

6. The battery material manufacturing apparatus according to any one of claims 2 to 4, wherein
the monitoring apparatus includes a sensor configured to monitor a strain caused in the molded article, and
the control apparatus controls the stretching apparatus within a range in which a strain rate in the molded article does not exceed a predetermined threshold rate.

7. The battery material manufacturing apparatus according to any one of claims 2 to 4, wherein
the monitoring apparatus includes a sensor configured to monitor a stretching speed of the molded article and a tension exerted in the molded article, and
the control apparatus includes an arithmetic unit configured to calculate a yield time at which at least a part of a monitored part set in the molded article reaches a yield tension after starting the stretching, and a completion time at which the stretching step in the monitored part is completed, and the control apparatus controls the stretching apparatus so as to change the stretching speed when the yield time is earlier than the completion time, and controls the stretching apparatus so as to maintain the stretching speed when the yield time is later than the completion time.

8. The battery material manufacturing apparatus according to any one of claims 2 to 4, wherein
the monitoring apparatus includes an optical inspection apparatus configured to determine a dispersion state of the filler, and
the control apparatus determines the stretching condition based on at least the dispersion state over a plurality of different areas.

9. The battery material manufacturing apparatus according to any one of claims 2 to 4, wherein
the stretching apparatus includes a temperature control unit configured to control a temperature of the molded article,
the monitoring apparatus includes a temperature sensor, and
the control apparatus determines the stretching condition according to the temperature of the molded article.

10. A battery material manufacturing system comprising:
a sheet casting apparatus comprising a receiving port configured to receive a kneaded material in a fluid state obtained by kneading a base material and a filler, an expanding unit configured to guide the kneaded material in a sending-out direction while expanding the kneaded material in a direction perpendicular to the sending-out direction, and a sending-out port, and configured to continuously sent out a sheet-like molded article to the stretching apparatus, the sending-out port being a slit-like opening through which the expanded kneaded material can be continuously send out as the molded article; and
the battery material manufacturing apparatus according to claim 1.

11. The battery material manufacturing system according to claim 10, further comprising a cast block comprising a cast roller configured to, while receiving and winding the sheet-like molded article sent out from the sending-out port at a fourth conveyance speed, send out the received molded article, and a rotational drive unit configured to rotationally drive the cast roller so as to send out the molded article at a fifth conveyance speed higher than the fourth conveyance speed.

12. The battery material manufacturing system according to claim 10, further comprising a rolling system configured to sandwich the molded article sent out from the sending-out port from front and back thereof, and roll the molded article.

13. The battery material manufacturing system according to claim 12, wherein
the rolling system includes a rolling roller configured to sandwich the molded article from front and back thereof, and roll the molded article, and
the control apparatus controls a rotation speed of the rolling roller.

14. The battery material manufacturing system according to claim 10, further comprising:
a cutting apparatus configured to cut the molded article and thereby manufacture the molded article that have been cut into sheet-like shapes; and
a laminating molding system configured to manufacture a laminate by laminating sheet-like objects to be laminated including at least one cut molded article.

15. The battery material manufacturing system according to claim 14, further comprising a laminating molding system including a frame-like pressing surface configured to laminate at least a part of an outer-sheath material made of either metal foil or resin and encapsulate the laminate.

16. The battery material manufacturing system according to claim 14 or 15, further comprising a vacuum chamber configured to perform lamination under a reduced-pressure environment.

17. The battery material manufacturing system according to claim 10, wherein the receiving port receives the kneaded material containing 50 wt% or more of a conductive filler as the filler.

18. A method for manufacturing a battery material, wherein a battery material manufacturing apparatus including a stretching apparatus:
receives a sheet-like molded article from a sheet casting apparatus at a first conveyance speed, the molded article being obtained by kneading a base material and a filler, and the sheet casting apparatus being configured to continuously send out the molded article;
stretches the molded article so as to reduce a thickness of the molded article by sending out the molded article at a second conveyance speed;
acquires monitoring data from a monitoring apparatus configured to monitor at least one of a tension exerted in the molded article, a strain caused in the molded article, and a thickness of the molded article at each of a plurality of different positions on the molded article;
determines a stretching condition under which no void is formed in the molded article according to the monitoring data; and
controls a stretching apparatus based on the stretching condition.
